# EUROPÄISCHE PATENTSCHRIFT

(11) **EP 3 014 957 B1**
(45) Veröffentlichungstag und Bekanntmachung des Hinweises auf die Patenterteilung: **09.08.2017**
(21) Anmeldenummer: 14732188.9
(22) Anmeldetag: 23.06.2014
(51) Int. Cl.: H05G 2/00

(54) **EUV-STRAHLUNGSERZEUGUNGSVORRICHTUNG MIT EINER STRAHLBEEINFLUSSUNGSOPTIK**
EUV RADIATION GENERATING DEVICE COMPRISING A BEAM INFLUENCING OPTICAL UNIT
DISPOSITIF GÉNÉRATEUR DE RAYONNEMENT EUV ÉQUIPÉ D'UNE OPTIQUE PERMETTANT D'AGIR SUR LE RAYONNEMENT

(30) Priorität: 28.06.2013 DE 102013212685
(43) Veröffentlichungstag der Anmeldung: 04.05.2016
(73) Patentinhaber: TRUMPF Lasersystems for Semiconductor Manufacturing GmbH, 71254 Ditzingen (DE)
(72) Erfinder: SCHULZ, Joachim, 70839 Gerlingen (DE); LAMBERT, Martin, 71404 Korb (DE)
(74) Vertreter: Kohler Schmid Möbus Patentanwälte
(86) Internationale Anmeldenummer: PCT/EP2014/063153
(87) Internationale Veröffentlichungsnummer: WO 2014/206935

(56) Entgegenhaltungen:
- WO-A2-2007/146329
- DE-A1-102008 025 381
- GB-A- 2 402 230
- JP-A- 2009 105 006

## Beschreibung

Die vorliegende Erfindung betrifft eine EUV-Strahlungserzeugungsvorrichtung mit mindestens einer Strahlungsquelle zur Erzeugung eines ersten und zweiten Eintrittsstrahls in Form von Laserstrahlen, sowie mit einer Strahlbeeinflussungsoptik zur Beeinflussung des ersten und des zweiten, dem ersten zumindest teilweise überlagerten Eintrittsstrahls hinsichtlich Strahlrichtung und/oder Strahldivergenz. Optiken zur Beeinflussung von zwei oder mehr Lichtstrahlen, insbesondere von zwei oder mehr Laserstrahlen, werden in verschiedenen technologischen Bereichen eingesetzt, beispielsweise in EUV-Strahlungserzeugungsvorrichtungen.

In der WO 2007/146329 A2 ist ein Laseroszillator einer Laserlichtquelle für eine EUV-Lichtquelle beschrieben, der einen Impulsverlängerer aufweist. Geringfügige Änderungen der Ausrichtung von optischen Komponenten des Impulsverlängerers, z.B. von Spiegeln innerhalb der Verzögerungsstrecke, können dazu verwendet werden, dass jeder von mehreren aufeinander folgenden Pulsen entlang eines geringfügig unterschiedlich ausgerichteten Weges verläuft.

In der JP 2009 105006 A ist ein Verfahren zur Erzeugung von EUV-Strahlung beschrieben, bei dem ein Pre-Puls und ein Haupt-Puls auf ein Target-Material eingestrahlt werden. Einer der beiden Pulse wird an einem Strahlteiler zu einem Spiegel reflektiert, während der andere Puls von dem Strahlteiler transmittiert wird.

### Aufgabe der Erfindung

Es ist die Aufgabe der vorliegenden Erfindung, eine EUV-Strahlungserzeugungsvorrichtung mit einer Strahlbeeinflussungsoptik bereitzustellen, mit der eine effiziente Beeinflussung von Laserstrahlen hinsichtlich ihrer Strahlrichtung und/oder ihrer Strahldivergenz möglich ist.

### Gegenstand der Erfindung

Diese Aufgabe wird erfindungsgemäß gelöst durch eine EUV-Strahlungserzeugungsvorrichtung der eingangs genannten Art mit einer Strahlbeeinflussungsoptik zur Beeinflussung eines ersten und eines zweiten, dem ersten zumindest teilweise überlagerten Eintrittsstrahls, der insbesondere im Wesentlichen kollinear zum ersten Eintrittsstrahl verlaufen kann, hinsichtlich Strahlrichtung und/oder Strahldivergenz, umfassend: einen Strahlteiler, der ausgebildet ist, den ersten Eintrittsstrahl als ersten Austrittsstrahl zu reflektieren und den zweiten Eintrittsstrahl zu transmittieren, sowie ein im Strahlengang des transmittierten zweiten Eintrittsstrahls angeordnetes Spiegelelement, welches den zweiten Eintrittsstrahl zum Strahlteiler zurück reflektiert, um einen vom Strahlteiler transmittierten, dem ersten Austrittsstrahl zumindest teilweise überlagerten zweiten Austrittsstrahl zu bilden, wobei die Strahlbeeinflussungsoptik zur Beeinflussung eines Winkels zwischen dem ersten und dem zweiten Austrittsstrahl und/oder zur Beeinflussung einer Strahldivergenz des ersten und/oder des zweiten Austrittsstrahls ausgebildet ist.

Durch die erfindungsgemäße EUV-Strahlungserzeugungsvorrichtung wird eine Vorrichtung bereitgestellt, mittels derer mit nur zwei optischen Elementen die Strahlrichtung und/oder die Strahldivergenz zweier eintretender, teilweise überlagerter, insbesondere (annähernd) kollinear verlaufender Strahlen beeinflusst werden kann. Unter einer teilweisen Überlagerung von Strahlen wird im Sinne dieser Anmeldung verstanden, dass sich deren Strahlengang teilweise überschneidet bzw. dass die Strahlen sich teilweise überlappen. Bei dem ersten und zweiten Eintrittsstrahl kann es sich grundsätzlich um Strahlen handeln, die von einer einzigen oder von mehreren Strahlungsquellen erzeugt werden. Es versteht sich, dass der erste und zweite Eintrittsstrahl die Strahlbeeinflussungsoptik nicht gleichzeitig durchlaufen müssen, vielmehr können der erste und zweite Eintrittsstrahl die Strahlbeeinflussungsoptik auch zeitversetzt durchlaufen, insbesondere wenn es sich um gepulste Strahlen handelt. Bei den Eintrittsstrahlen kann es sich grundsätzlich auch um zwei Strahlungsanteile ein- und desselben Strahls handeln, von denen der eine vom Strahlteiler reflektiert und der andere vom Strahlteiler transmittiert wird. Es versteht sich, dass in diesem Fall der erste und zweite Eintrittsstrahl kollinear zueinander verlaufen. Unabhängig davon, ob eine einzige Strahlungsquelle oder mehrere Strahlungsquellen den ersten und zweiten Eintrittsstrahl erzeugen, teilt der Strahlteiler die beiden Eintrittsstrahlen anhand mindestens einer optischen Eigenschaft, in der sich die beiden Eintrittsstrahlen unterscheiden, in einen ersten, als erster Austrittsstrahl reflektierten Strahlungsanteil und einen zweiten, weiter zum Spiegelelement transmittierten Strahlungsanteil auf.

Zur Beeinflussung der relativen Strahlrichtung des ersten und zweiten Austrittsstrahls sind der Strahlteiler und/oder das Spiegelelement der Strahlbeeinflussungsoptik bevorzugt in unterschiedlichen Relativpositionen und/oder Relativausrichtungen anordenbar. Dies ermöglicht nicht nur die Ausrichtung der beiden Austrittsstrahlen unter einem (typischer Weise variablen) Winkel zueinander, sondern grundsätzlich auch einen parallelen oder kollinearen Verlauf des ersten und zweiten Austrittsstrahls zueinander. Typischer Weise sind der erste und zweite Eintrittsstrahl kollimiert, wenn sie auf den Strahlteiler auftreffen, dies ist aber nicht zwingend erforderlich. Zur Beeinflussung der Strahldivergenz des ersten und/oder des zweiten Austrittsstrahls, d.h. zur Erzeugung eines divergenten oder fokussierten Austrittsstrahls aus einem kollimierten Eintrittsstrahl können der Strahlteiler und/oder das Spiegelelement deformierbar ausgebildet sein.

Im Sinne dieser Anmeldung wird unter einer Beeinflussung der Strahlrichtung verstanden, dass die jeweils zugehörige Größe (d.h. die relative Ausrichtung der Ausgangsstrahlen bzw. die Strahldivergenz mindestens eines der Ausgangsstrahlen) mit Hilfe der Strahlformungsoptik verändert werden kann. Die Veränderung kann hierbei gesteuert (mittels Aktuatoren) erfolgen, es ist aber auch möglich, dass die Strahlformungsoptik nur eine manuelle oder ggf. eine fest vorgegebene Veränderung der jeweiligen Größe (relative Ausrichtung bzw. Divergenz) der Strahlen ermöglicht.

Das Spiegelelement reflektiert bevorzugt den zweiten Strahlungsanteil (nahezu) vollständig zum Strahlteiler, d.h. das Spiegelelement ist bevorzugt hochreflektierend ausgebildet. Grundsätzlich kann das Spiegelelement jedoch auch nur teilweise reflektierend bzw. teiltransmissiv ausgebildet sein. In diesem Fall kann der von dem Spiegelelement transmittierte Strahlungsanteil z.B. zur Strahlvermessung genutzt werden. Der zweite Austrittsstrahl ist in der Regel dem ersten Austrittsstrahl zumindest teilweise überlagert, d.h. der Strahlengang bzw. die Strahlwege der Austrittstrahlen überlappen sich zumindest teilweise, so dass die Abmessungen der optischen Oberflächen von optischen Elementen, welche im weiteren Strahlengang der beiden Austrittsstrahlen angeordnet sind, möglichst klein gehalten werden können. Um dies zu erreichen, sind der Strahlteiler und das Spiegelelement typischer Weise in einem geringen Abstand zueinander angeordnet, der in der Regel bei weniger als dem doppelten Strahldurchmesser eines Eintrittsstrahls liegt bzw. der kleiner ist als die Summe der Strahldurchmesser der Eintrittsstrahlen.

Bei einer bevorzugten Ausführungsform sind der Strahlteiler und/oder das Spiegelelement zur Beeinflussung des Winkels zwischen dem ersten und dem zweiten Austrittsstrahl, insbesondere mittels Aktuatoren, verkippbar. Durch die Kippbarkeit des Strahlteilers und/oder des Spiegelelements ist eine besonders wirksame Möglichkeit der Beeinflussung der Strahlrichtungen der beiden Austrittsstrahlen gegeben. Dabei ist es möglich, dass beispielsweise der Strahlteiler ortsfest in der Strahlbeeinflussungsoptik angeordnet ist und das Spiegelelement relativ hierzu kippbar ist. Alternativ oder zusätzlich kann auch der Strahlteiler kippbar in der Strahlbeeinflussungsoptik angeordnet sein. Dabei können die beiden Elemente (Strahlteiler und Spiegelelement) jeweils um eine oder mehrere Kippachsen kippbar an der Strahlbeeinflussungsoptik (z.B. an einer Grundstruktur der Strahlbeeinflussungsoptik) gelagert sein, wobei die Kippachsen beispielsweise durch das jeweilige Element hindurch verlaufend (beispielsweise durch die Mitte des jeweiligen Elements hindurch verlaufend) oder gegenüber dem jeweiligen Element versetzt (außerhalb des Elements) angeordnet sein können.

Zum Kippen der Elemente werden bevorzugt Aktuatoren eingesetzt. Hierbei kann grundsätzlich jedwede Art von Aktuatoren eingesetzt werden. Bevorzugt werden Aktuatoren verwendet, die sich präzise und schnell ansteuern lassen (zum Beispiel Servo- oder Piezomotoren mit vergleichsweise kurzen Verstellwegen). Alternativ oder zusätzlich ist auch eine manuelle Verkippung mindestens eines der beiden Elemente zur Beeinflussung der relativen Strahlrichtung zwischen erstem und zweitem Austrittsstrahl möglich. In diesem Fall kann das jeweilige Element verkippt und in einer jeweiligen Winkelstellung fixiert werden.

Bei einer bevorzugten Ausführungsform ist das Spiegelelement zur Beeinflussung der Strahldivergenz des zweiten Austrittsstrahls, insbesondere mittels eines Aktuators, deformierbar ausgebildet. Die Deformation des Spiegelelements ermöglicht die Beeinflussung der Strahldivergenz des zweiten Austrittsstrahls ohne Veränderung der Strahldivergenz des ersten Austrittsstrahls. Bei der Deformation des Spiegelelements wird die optisch wirksame Oberfläche des Spiegelelements (die Oberflächenform der Spiegeloberfläche) derart verändert, dass die Strahldivergenz des zweiten Austrittsstrahls variiert. Wölbt sich die Spiegeloberfläche des Spiegelelements beispielsweise konvex nach außen, so wird die Divergenz des reflektierten Strahls vergrößert. Wird die Wölbung dagegen verringert, insbesondere in konkaver Weise, so ist auch eine Verringerung der Divergenz des Strahls möglich.

Das deformierbare Spiegelelement kann wie in der EP 1424584 A1 der Anmelderin beschrieben als Spiegel ausgebildet sein, der einen Membranträger und eine daran angebrachte Spiegelplattenmembran aufweist. Die Spiegelplattenmembran ist über ihre innenliegende Membranrückseite mit einem Druck beaufschlagbar, der beispielsweise über ein Fluid bereitgestellt wird und unter dessen Einfluss sich die Spiegelplattenmembran mehr oder weniger krümmt bzw. ihre geometrische Gestalt ändert. Alternativ kann zur Deformation des Spiegelelements, genauer gesagt der Spiegeloberfläche, auch ein spiegelelementrückseitig angeordneter Aktor vorgesehen sein; beispielsweise ein elektromechanischer Servomotor oder ein piezoelektrisches Element bzw. mehrere Piezoelemente. Bevorzugt sind Aktoren einzusetzen, die sich präzise und schnell ansteuern lassen, um eine schnelle und präzise Einstellung unterschiedlicher Spiegeloberflächengeometrien zu ermöglichen. Derartige Aktoren greifen bevorzugt zentrisch auf der Rückseite der Spiegelfläche an.

Bei einer Ausführungsform ist der Strahlteiler plattenförmig bzw. plattenartig ausgebildet, d.h. der Strahlteiler weise eine eintrittsseitige optische Oberfläche und eine dieser gegenüber liegende spiegelelementseitige optische Oberfläche auf. Die beiden optischen Oberflächen an den gegenüber liegenden Seiten des Strahlteilers müssen nicht zwingend parallel zueinander verlaufen, d.h. diese können auch unter einem (bspw. spitzen) Winkel zueinander angeordnet sein, so dass der plattenartige Strahlteiler eine Keilform besitzt. Die optischen Oberflächen können plan ausgebildet sein oder eine Krümmung aufweisen (s.u.). Die Verwendung eines plattenförmigen Strahlteilers ermöglicht nicht nur eine kompakte Bauweise der Strahlbeeinflussungsoptik, sondern auch eine direkte zumindest teilweise Überlagerung der Austrittsstrahlen ohne die Verwendung zusätzlicher optischer Elemente.

Bei einer weiteren bevorzugten Ausführungsform der Strahlbeeinflussungsoptik ist der Strahlteiler als wellenlängenselektives Element ausgebildet, d.h. die beiden Eintrittsstrahlen werden in Abhängigkeit von ihrer Wellenlänge entweder reflektiert oder transmittiert. Beispielsweise kann Strahlung mit einer Wellenlänge kleiner als eine bestimmte Grenzwellenlänge von dem Strahlteiler direkt als erster Austrittsstrahl reflektiert werden, wohingegen Strahlung mit einer Wellenlänge größer als die Grenzwellenlänge vom Strahlteiler zunächst transmittiert und nach der Reflexion am Spiegelelement erneut von dem Strahlteiler transmittiert wird, um den zweiten Austrittsstrahl zu bilden. Der Strahlteiler kann für die Wellenlängenselektion beispielsweise an der eintrittsseitigen optischen Oberfläche eine polarisationsselektive, insbesondere dielektrische Beschichtung aufweisen.

Bei einer bevorzugten Weiterbildung der vorhergehenden Ausführungsform ist der Strahlteiler als Etalon ausgebildet. In diesem Fall wird lediglich Strahlung einer definierten Wellenlänge bzw. eines definierten (schmalen) Wellenlängenbereichs vom Strahlteiler transmittiert. Der erste Eintrittsstrahl wird an dem Etalon als erster Austrittsstrahl reflektiert. Die Wirkung eines Etalons beruht auf dem Grundprinzip des Fabry-Pérot-Interferometers, bei dem typischer Weise zwei parallel zueinander ausgerichtete, in einem geringen Abstand (beispielsweise in der Größenordnung von Mikrometern) angeordnete plane Spiegelflächen verwendet werden, um eine Kavität zu bilden. Ein solches Etalon transmittiert nur Strahlung bei einer Wellenlänge oder einem engen Wellenlängenbereich, welche bzw. welcher die Resonanzbedingung erfüllt. Als Etalon kann ein Substrat, beispielsweise in Form einer dünnen planparallelen Platte (als Resonator), verwendet werden, das an beiden Seitenflächen mit einer (teil-)reflektierenden Beschichtung versehen ist. Hierbei kann an einer Seitenfläche eine Beschichtung z.B. in Form eines Stapels alternierender hoch und niedrig brechender Viertelwellen-Schichten auf dem rückseitig entspiegelten Substrat angebracht werden, dessen Dicke z.B. einem Vielfachen einer Halbwellenschicht entspricht. Eine an der anderen Seitenfläche angebrachte Beschichtung kann einen weiteren Stapel von alternierenden hoch und niedrig brechenden Viertelwellen-Schichten aufweisen. Die Angaben "Halbwellen-" bzw. "Viertelwellen-"-Schichten beziehen sich hierbei auf die optische Dicke der Schichten, welche der Hälfte bzw. einem Viertel der zentralen (resonanten) Wellenlänge des Etalons entspricht. Es können auch andere Arten von Etalons, beispielsweise so genannte Luft-Spalt-Etalons (engl. "air-spaced etalons") verwendet werden, bei denen zwei dünne Planplatten durch Abstandshalter in einem vorgegebenen Abstand zueinander gehalten werden. Grundsätzlich ist es ferner möglich, zur Einstellung der Resonanzbedingung, mithin zur Einstellung der Wellenlänge bzw. des Wellenlängenbereichs, die bzw. der transmittiert wird, den Abstand der Planplatten zueinander einstellbar zu gestalten. Der erste Eintrittsstrahl wird von dem Etalon reflektiert, der zweite Eintrittsstrahl wird transmittiert und am Spiegelelement reflektiert.

Bei einer anderen bevorzugten Ausführungsform ist der Strahlteiler als Polarisationsstrahlteiler ausgebildet. Der Strahlteiler kann die eintretende Strahlung (den ersten und zweiten Eintrittsstrahl) in Abhängigkeit von deren Polarisationseigenschaften aufteilen. Beispielsweise kann Strahlung mit einer ersten Polarisationsrichtung von dem Strahlteiler direkt als erster Austrittsstrahl reflektiert werden, wohingegen Strahlung mit einer zweiten, typischer Weise zur ersten senkrechten Polarisationsrichtung vom Strahlteiler transmittiert wird. Bei dem Eintrittsstrahl mit der ersten Polarisationsrichtung und dem Eintrittsstrahl mit der zweiten Polarisationsrichtung kann es sich auch um zwei senkrecht zueinander polarisierte Anteile ein- und desselben in die Strahlbeeinflussungsoptik eintretenden Strahls handeln, der von einer einzigen Strahlungsquelle erzeugt wird und der beispielsweise elliptisch, zirkular oder linear polarisiert sein kann. Bei einem linear polarisierten Strahl darf die Polarisationsrichtung typischer Weise nicht in der Einfallsebene oder senkrecht zu dieser verlaufen, da ansonsten die einfallende Strahlung entweder nur reflektiert oder nur transmittiert wird.

Bevorzugt ist des Weiteren eine Strahlbeeinflussungsoptik, bei der zur Erzeugung einer vorgegebenen Divergenz des ersten und des zweiten Austrittsstrahls eine eintrittsseitige und/oder eine spiegelelementseitige optische Oberfläche des Strahlteilers eine Krümmung aufweisen. Dadurch kann in vorteilhafter Weise auch der erste Austrittsstrahl in seiner Divergenz verändert werden. Durch die eintrittsseitige und/oder die spiegelelementseitige Krümmung der optischen Oberflächen des Strahlteilers (typischerweise eine konvexe Krümmung) wird die Strahldivergenz des ersten Austrittsstrahls derart beeinflusst, dass diese einen vorbestimmten (dann vergrößerten) Wert annimmt. Grundsätzlich ist es auch möglich, die Krümmung der optischen Oberflächen (eintrittsseitig und/oder spiegelelementseitig) nach den im Hinblick auf das Spiegelelement vorbeschriebenen Grundsätzen einstellbar zu gestalten, indem die erste und/oder zweite optische Oberfläche deformierbar ausgebildet werden. In diesem Fall können die Strahldivergenzen sowohl des ersten als auch des zweiten Austrittsstrahls unabhängig von dem Spiegelelement variiert werden.

Ebenfalls bevorzugt ist eine Ausführungsform, bei der zur Erzeugung eines vorgegebenen Winkelversatzes zwischen dem ersten und dem zweiten Austrittsstrahl eine eintrittsseitige optische Oberfläche und eine spiegelelementseitige optische Oberfläche des Strahlteilers unter einem Winkel zueinander ausgerichtet sind. Die Strahlungsbeeinflussungsoptik gemäß dieser Ausführungsform kann beispielsweise eingesetzt werden, wenn die Verkippbarkeit des Spiegelelements und/oder des Strahlteilers aufgrund bauraumbedingter Umstände begrenzt ist. In diesem Fall ermöglicht es der Strahlteiler mit zueinander unter einem bspw. spitzen Winkel verlaufenden eintrittsseitigen und spiegelelementseitigen optischen Oberflächen, auch bei paralleler Ausrichtung von Strahlteiler und Spiegelelement einen Winkelversatz zu erzeugen. Der erste Eintrittsstrahl wird an der eintrittsseitigen optischen Oberfläche des Strahlteilers unverändert als erster Austrittsstrahl reflektiert. Der zweite Eintrittsstrahl wird aufgrund des Winkelversatzes zwischen den optischen Oberflächen des Strahlteilers abgelenkt, sodass sich die Strahlrichtung des zweiten Austrittsstrahls gegenüber der Strahlrichtung des ersten Austrittsstrahls verändert. Der Winkel zwischen den beiden Oberflächen kann hierbei an die jeweils vorliegende Bauraumsituation angepässt werden.

Gemäß einer weiteren Ausführungsform umfasst die Strahlbeeinflussungsoptik weiter ein Fokussierelement zur Fokussierung des ersten Austrittsstrahls an einem ersten Fokuspunkt und des zweiten Austrittsstrahls an einem zweiten Fokuspunkt. Durch den Strahlteiler und das Spiegelelement können beide Austrittsstrahlen insbesondere auf das gleiche Fokussierelement ausgerichtet und an dem ersten und zweiten Fokuspunkt fokussiert werden. Der erste und zweite Austrittsstrahl bzw. deren erste und zweite Fokuspunkte sollen je nach beabsichtigter Anwendung gezielt in einer ersten und zweiten Soll-Fokuslage fokussiert werden, wobei die erste und zweite Soll-Fokuslage gegebenenfalls auch übereinstimmen können. Für die Fokussierung können reflektive Fokussierelemente, beispielsweise Parabolspiegel, eingesetzt werden, aber auch transmissive optische Elemente, beispielsweise Linsen. Der Strahlteiler, das Spiegelelement sowie das oder ggf. die Fokussierelemente sind typischerweise jeweils an einer Grundstruktur der Strahlbeeinflussungsoptik befestigt oder gelagert. Kippbare Elemente, wie zum Beispiel der Strahlteiler und/oder das Spiegelelement, sind in der Regel motorisch angetrieben oder ggf. manuell verkippbar an der Grundstruktur gelagert.

Bei einer bevorzugten Weiterbildung der vorhergehenden Ausführungsform ist das Fokussierelement als Fokussierlinse ausgebildet. Mit Hilfe einer Fokussierlinse können die beiden auftreffenden Austrittsstrahlen, die sich teilweise überlagern, wirksam fokussiert werden, insbesondere wenn diese die Linse ungefähr mittig treffen. Als Fokussierlinsen können zum Bespiel (bi-)konvexe Quarzlinsen eingesetzt werden, je nach Wellenlänge der verwendeten Strahlung sind aber auch andere Materialien, z.B. Zinkselenid, möglich.

Bevorzugt ist eine Ausführungsform, bei welcher der Strahlteiler und/oder das Spiegelelement insbesondere mittels Aktuatoren translatorisch verfahrbar sind. Durch die translatorische Verfahrbarkeit kann die relative Anordnung, insbesondere der Abstand der jeweiligen optischen Oberflächen des Spiegelelements und des Strahlteilers eingestellt werden. Auf diese Weise sind die beiden Austrittsstrahlen leicht in Richtung auf das Fokussierelement ausrichtbar und die Beeinflussung der Lage eines jeweiligen Fokuspunkts vereinfacht sich. Insbesondere wenn der Strahlteiler und/oder das Spiegelelement eine Krümmung aufweisen, kann die translatorische Verfahrbarkeit auch zur Beeinflussung des Winkels zwischen dem ersten und dem zweiten Austrittsstrahl dienen. Durch eine geeignete Wahl des Abstands zwischen dem Strahlteiler und dem Spiegelelement kann insbesondere erreicht werden, dass bei einer Änderung der Strahlrichtung und/oder Divergenz der Eintrittsstrahlen das Fokussierelement im Wesentlichen mittig getroffen wird. Dabei kann insbesondere eine Änderung der Strahlrichtung bzw. der Strahllage des zweiten Austrittsstrahls entlang einer Achse kompensiert werden, welche senkrecht zur Strahlrichtung des ersten Austrittstrahls in der Umlenkebene von Eintrittsstrahl und zweitem Austrittsstrahl liegt. Typischer Weise muss hierbei die Bedingung eingehalten werden, dass der zweite Austrittsstrahl in der Grundstellung (d.h. bei unverändertem Abstand zwischen Strahlteiler und Spiegelelement) einen größeren Abstand zu den Eintrittsstrahlen aufweist als der erste Austrittsstrahl. Der Strahlteiler und/oder das Spiegelelement sind in diesem Fall typischer Weise nicht nur verkippbar sondern auch translatorisch verfahrbar an der Grundstruktur der Strahlbeeinflussungsoptik gelagert. Zum Verfahren des Strahlteilers und/oder des Spiegelelements ist bevorzugt mindestens ein Aktuator vorgesehen, der insbesondere schnell und präzise ansteuerbar ist.

Bevorzugt umfasst die Strahlbeeinflussungsoptik weiter eine Steuereinrichtung zur Ansteuerung von den Strahlteiler und/oder das Spiegelelement verkippenden und/oder deformierenden und/oder verfahrenden Aktuatoren. Durch die individuelle Ansteuerung der Aktuatoren können der erste und der zweite Fokuspunkt eine vorbestimmte (Soll-)Lage im dreidimensionalen Raum einnehmen oder einer vorbestimmten Bewegungsbahn im dreidimensionalen Raum folgen, d.h. die Fokuslagen können in allen drei Raumdimensionen (X-Richtung, Y-Richtung und Z-Richtung) eingestellt werden. Dabei muss beachtet werden, dass optische Elemente, welche sich im Strahlengang der beiden Austrittsstrahlen befinden wie bspw. das Fokussierelement von beiden Austrittsstrahlen weiterhin mittig ausgeleuchtet werden sollten. Durch die Änderung des Abstands zwischen dem Strahlteiler und dem Spiegelelement ist dies auch bei einer Änderung der Strahlrichtung des zweiten Austrittstrahls weiterhin optimal möglich, wenn die Änderung der Strahllage des zweiten Austrittsstrahls entlang einer Achse erfolgt, die senkrecht zur Strahlrichtung des ersten Austrittsstrahls und in der Umlenkebene von Eintrittsstrahl und zweiten Austrittsstrahl liegt. Wie oben dargestellt wurde, sollte hierbei die Bedingung eingehalten werden, dass der zweite Austrittsstrahl in der Grundstellung (d.h. bei unveränderten Abstand zwischen Strahlteiler und Spiegelelement) einen größeren Abstand zum Eintrittsstrahl aufweist als der erste Austrittsstrahl. In der Grundstellung ist der Abstand zwischen Strahlteiler und Spiegelelement typischer Weise so gewählt, dass die beiden Austrittsstrahlen im Wesentlichen mittig auf das Fokussierelement auftreffen. Bei einer Änderung der Strahlrichtung und/oder Divergenz der Eintrittsstrahlen können die Aktuatoren derart angesteuert werden, dass die Austrittsstrahlen näherungsweise mittig auf das Fokussierelement auftreffen.

Die Strahlformungsoptik kann insbesondere bei einer individuellen Ansteuerung der Aktuatoren auch vorteilhaft in einer EUV-Strahlerzeugungsvorrichtung zur Erzeugung von EUV-Strahlung eingesetzt werden, bei der ein Laserstrahl von einer Treiberlasereinrichtung in Richtung auf eine Zielposition geführt wird. Die Strahlbeeinflussungsoptik kann hierbei in den Strahlengang zwischen der Treiblasereinrichtung und der Zielposition, beispielsweise in eine Strahlführungseinrichtung oder andere optische Einrichtungen integriert werden.

Bei einer EUV-Strahlerzeugungsvorrichtung wird der Laserstrahl von der Treiberlasereinrichtung über ein den Laserstrahl an der Zielposition fokussierendes Element geführt. An der Zielposition wird ein (bewegliches) Target bereitgestellt, welches bei der Bestrahlung mit dem Laserstrahl angeregt wird, in einen Plasma-Zustand übergeht und hierbei EUV-Strahlung emittiert. Typischerweise werden als Treiblasereinrichtungen Treiberlaser in Form von CO₂-Lasern verwendet, die bei bestimmten Target-Materialien, z.B. Zinn, eine hohe Konversionseffizienz zwischen der Eingangsleistung des Treiberlasers und der Ausgangsleistung der EUV-Strahlung ermöglichen.

Bei der erfindungsgemäßen EUV-Strahlungserzeugungsvorrichtung bildet die EUV-Strahlungserzeugungseinrichtung ein Strahlformungssystem mit einer Strahlbeeinflussungsoptik sowie mit einer oder zwei Strahlungsquellen zur Erzeugung des ersten und zweiten Eintrittsstrahls. Der erste und der zweite Eintrittsstrahl, die (näherungsweise) kollinear verlaufen und bevorzugt kollimiert sind, können zum Beispiel durch eine (einzige) Strahlungsquelle gleichzeitig erzeugt und/oder in weiteren, zur Verstärkung eines Laserstrahls geeigneten Verstärkerstufen verstärkt werden. In diesem Fall wird der auf die Strahlbeeinflussungsoptik auftreffende Strahl erst an dem Strahlteiler in die zwei Eintrittsstrahlen aufgeteilt, die sich hinsichtlich mindestens einer ihrer Eigenschaften (z.B. hinsichtlich Wellenlänge und/oder Polarisationsrichtung) unterscheiden. Der Strahlteiler kann hierbei so ausgelegt werden, dass die Intensität der Strahlungsanteile der beiden Eintrittsstrahlen ein gewünschtes Verhältnis aufweist. In diesem Fall ist eine Strahlbeeinflussungsoptik zur Beeinflussung der Strahlrichtung und/oder der Strahldivergenz von zwei Eintrittsstrahlen besonders vorteilhaft einsetzbar, um ein bewegliches Target an zwei Soll-Positionen mit den beiden Austrittsstrahlen zielgenau zu treffen.

Der erste und der zweite Eintrittsstrahl können auch durch zwei Strahlungsquellen unabhängig voneinander gleichzeitig oder ggf. zeitlich versetzt erzeugt werden. In beiden Fällen treten der erste Eintrittsstrahl als erster Austrittsstrahl und der zweite Eintrittsstrahl als zweiter Austrittsstrahl aus dem Strahlformungssystem aus. Die Strahlungserzeugung durch die eine oder mehreren Strahlungsquellen kann gepulst oder ggf. kontinuierlich erfolgen. Insbesondere können von der gleichen oder von unterschiedlichen Strahlungsquellen erzeugte Eintrittsstrahlen zeitlich kurz aufeinander folgend auf die Strahlbeeinflussungsoptik auftreffen.
Bei einer bevorzugten Ausführungsform weist die EUV-Strahlungserzeugungsvorrichtung eine Regeleinrichtung zum Regeln des ersten Fokuspunkts an eine erste Soll-Fokuslage und des zweiten Fokuspunkts an eine zweite Soll-Fokuslage auf, wobei die erste und zweite Soll-Fokuslage auch zusammenfallen können. Eine solche Regelung ist vorteilhaft, wenn strahlungsquellenseitig Störungen auftreten, die dazu führen, dass sich die Fokuslage ändert. Beispielsweise können durch die Regeleinrichtung Störungen in Form von Schwankungen in der Richtung oder Divergenz der Eintrittsstrahlen (beispielsweise Drift) "herausregelt" bzw. unterdrückt werden, sodass die beiden Austrittsstrahlen bzw. die beiden Foki durch die Nachregelung in ihrer jeweiligen SollPosition bzw. Soll-Lage verbleiben.
Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.
Es zeigen:
- Fig. 1: eine schematische Darstellung einer ersten Strahlbeeinflussungsoptik, die einen Strahlteiler und ein Spiegelelement aufweist,
- Fig. 2: eine schematische Darstellung eines zweiten Strahlbeeinflussungsoptik mit einem deformierbaren Spiegelelement,
- Fig. 3: eine schematische Darstellung eines dritten Strahlbeeinflussungsoptik, bei welcher der Strahlteiler eintrittsseitig eine gekrümmte optische Oberfläche aufweist,
- Fig. 4: eine schematische Darstellung eines vierten Strahlbeeinflussungsoptik mit einem plattenartigen, keilförmig ausgebildeten Strahlteiler,
- Fig. 5: eine schematische Darstellung der Strahlbeeinflussungsoptik analog Fig. 2 mit einer Fokussierlinse,
- Fig. 6: die Strahlbeeinflussungsoptik gemäß Fig. 5 mit einem in eine andere Position verschobenen Spiegelelement, und
- Fig. 7: eine schematische Darstellung einer EUV-Strahlungserzeugungsvorrichtung mit einer Strahlbeeinflussungsoptik.

In der folgenden Beschreibung der Zeichnungen werden für gleiche bzw. funktionsgleiche Bauteile identische Bezugszeichen verwendet. Auf die Darstellung der Strahlbrechung an den jeweiligen Oberflächen wurde verzichtet.

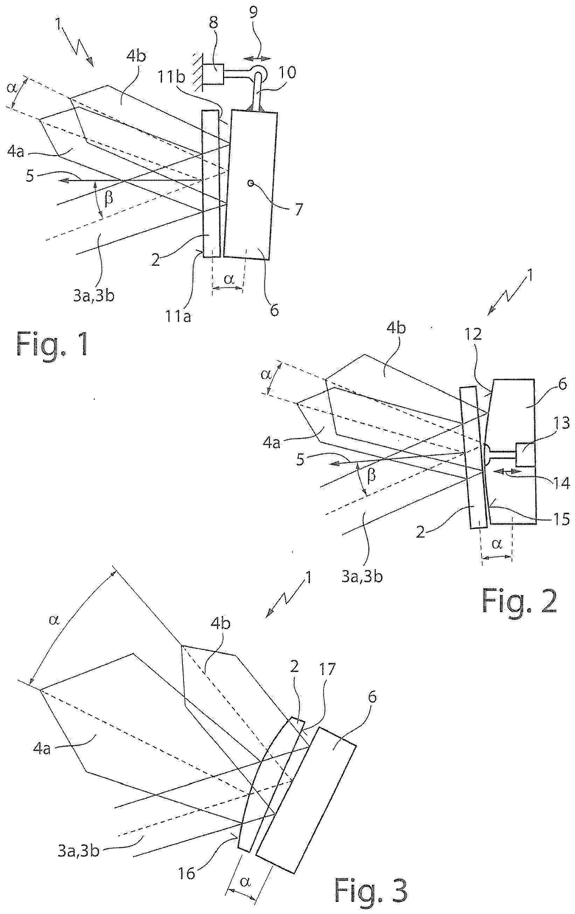

**Fig. 1** zeigt eine Strahlbeeinflussungsoptik 1, die einen Strahlteiler 2 aufweist, der ausgebildet ist, einen ersten Eintrittsstrahl 3a als ersten Austrittsstrahl 4a zu reflektieren und einen zweiten, zum ersten kollinear verlaufenden kollimierten Eintrittsstrahl 3b zu transmittieren. Der Strahlteiler 2 ist plattenartig ausgebildet, d.h. dieser weist eine vergleichsweise geringe Dicke von typischer Weise weniger als ca. seiner halben Apertur auf. Die kollinear zueinander verlaufenden Eintrittsstrahlen 3a,3b fallen unter einem Winkel β zur Normalenrichtung 5 des Strahlteilers 2 ein. Die Strahlbeeinflussungsoptik 1 weist ferner ein Spiegelelement 6 auf, das im Strahlengang des transmittierten zweiten Eintrittsstrahls 3b angeordnet ist und das so ausgebildet bzw. so angeordnet ist, dass der zweite Eintrittsstrahl 3b zum Strahlteiler 2 zurück reflektiert wird, um einen vom Strahlteiler 2 transmittierten zweiten Austrittsstrahl 4b zu bilden. Anders als in Fig. 1 gezeigt können der erste und zweite Eintrittsstrahl 3a, 3b nur teilweise überlagert auf den Strahlteiler 2 auftreffen, d.h. deren Strahlengang überschneidet sich nur teilweise und nicht wie in Fig. 1 gezeigt vollständig.

Das Spiegelelement 6 ist um eine Kippachse 7 kippbar in der Strahlbeeinflussungsoptik 1 angeordnet, so dass der zweite Austrittsstrahl 4b unter einem in Abhängigkeit von der Ausrichtung des Spiegelelements 6 einstellbaren Winkel α zum ersten Austrittsstrahl 4a verläuft. Alternativ oder zusätzlich kann auch der Strahlteiler 2 um eine entsprechende Kippachse kippbar in der Strahlbeeinflussungsoptik 1 angeordnet sein (nicht dargestellt). Auf diese Weise können durch die Strahlbeeinflussungsoptik 1 zwei kollinear zueinander verlaufende Eintrittsstrahlen 3a, 3b einfach und wirkungsvoll so beeinflusst werden, dass die relative Strahlrichtung bzw. der Winkel α zwischen den entsprechenden Austrittsstrahlen 4a, 4b gezielt einstellbar ist. Gegebenenfalls kann auf die Möglichkeit der einstellbaren Ausrichtung der austretenden Laserstrahlen 4a, 4b verzichtet werden. In diesem Fall sind der Strahlteiler 2 und das Spiegelelement 6 feststehend angeordnet und nicht parallel zueinander ausgerichtet.

Zum Kippen des Spiegelelements 6 (bzw. zum Kippen des Strahlteilers 2) ist ein Aktuator 8 vorgesehen, durch den die Ausrichtung bzw. Orientierung des Spiegelelements 6 beeinflussbar ist. In Fig. 1 ist der Aktuator 8 als ein in einer Bewegungsrichtung 9 agierender Linearaktuator ausgebildet, der das Spiegelelement 6 über eine Hebelmechanik 10 um die Kippachse 7 kippt und somit die Ausfallrichtung des zweiten Austrittsstrahls 4b relativ zum ersten Austrittsstrahl 4a verändert. In Fig. 1 ist der zweite Austrittsstrahl 4b dem ersten Austrittsstrahl 4a zumindest teilweise überlagert. Zweck einer solchen zumindest teilweisen Überlagerung ist es, dass die im weiteren Strahlengang der beiden Austrittsstrahlen 4a, 4b angeordneten Optiken nur eine vergleichsweise kleine optische Oberfläche aufweisen müssen. Durch eine entsprechende relative Anordnung des Spiegelelements 6 zum Strahlteiler 2 ist jedoch grundsätzlich auch ein Strahlengang der beiden Austrittsstrahlen 4a, 4b ohne eine gegenseitige Überlagerung möglich.

Der Strahlteiler 2 ist in dem in Fig. 1 gezeigten Beispiel als wellenlängenselektives Element ausgebildet, das die beiden Eintrittsstrahlen 3a, 3b in Abhängigkeit von ihrer Wellenlänge entweder reflektiert oder transmittiert. Der Strahlteiler 2 kann hierzu auf seiner Vorderseite 11 a mit einer wellenlängenselektiven, typischer Weise dielektrischen Beschichtung versehen sein. Der Strahlteiler 2 kann auch als Etalon ausgebildet sein, das als zweiten Austrittsstrahl 4b nur die Strahlung durch den Strahlteiler 2 hindurchlässt, die eine vorgegebene Resonanzbedingung erfüllt und einer definierten Wellenlänge bzw. einem definierten Wellenlängenbereich entspricht. Im letzteren Fall kann sowohl die eintrittsseitige optische Oberfläche 11a als auch die spiegelelementseitige optische Oberfläche 11b eine teilreflektierende Beschichtung aufweisen, die auf ein Substrat aufgebracht ist. Alternativ kann der Strahlteiler 2 auch als zweiteiliges Etalon ausgebildet sein, d.h. der Strahlteiler 2 ist aus zwei Platten 11 a, 11 b zusammengesetzt, zwischen denen ein dünner Spalt gebildet ist.

In **Fig. 2** ist ein weiteres Beispiel für eine Strahlbeeinflussungsoptik 1 zur Beeinflussung des ersten und des zweiten, zum ersten kollinear verlaufenden Eintrittsstrahls 3a,3b dargestellt. Im Unterschied zu Fig. 1 ist das Spiegelelement 6 nicht nur um die Kippachse 7 kippbar, sondern zur Erzeugung einer unterschiedlichen Strahldivergenz des ersten und zweiten Austrittsstrahls 4a,4b deformierbar ausgebildet, genauer gesagt ist die Krümmung einer Spiegeloberfläche 12 des Spiegelelements 6 einstellbar. Wird das Spiegelelement 6 deformiert, so verändert sich die optisch wirksame Oberfläche 12 des Spiegelelements 6 und mit ihr die Strahldivergenz des von der optischen Oberfläche 12 reflektierten zweiten Austrittsstrahls 4b. Wölbt sich die Spiegeloberfläche 12 des Spiegelelements 6 konvex nach außen, so wird die Divergenz des reflektierten zweiten Austrittsstrahls 4b vergrößert. Wird die Wölbung verringert, verringert sich auch die Divergenz des zweiten Austrittsstrahls 4b. Grundsätzlich kann durch eine entsprechende Wölbung der Spiegeloberfläche 12 auch eine Fokussierung des zweiten Austrittsstrahls 4b erreicht werden.

Um eine mehr oder weniger stark ausgeprägte Krümmung der Spiegeloberfläche 12 zu erzeugen, ist im Inneren des Spiegelelements 6 bei dem in Fig. 2 gezeigten Beispiel ein ansteuerbarer Aktuator 13 vorgesehen. Der Aktuator 13 kann beispielsweise als ein in einer Bewegungsrichtung 14 agierender Linearaktuator ausgebildet sein, der mittig an der Rückseite 15 der Spiegeloberfläche 12 angreift und diese somit unterschiedlich stark wölbt. Es versteht sich, dass eine einstellbare Deformation bzw. Beeinflussung der Krümmung der Oberfläche 12 des Spiegelelements 6 auch auf andere Weise möglich ist, beispielsweise indem die als Membran ausgebildete Oberfläche 12 des Spiegelelements an der Rückseite 15 mit einem Fluiddruck beaufschlagt wird, wie dies beispielsweise in der EP 1 424 584 A1 der Anmelderin beschrieben ist.

Durch die Strahlbeeinflussungsoptik 1 gemäß Fig. 2 können die kollinear zueinander verlaufenden Eintrittsstrahlen 3a,3b nicht nur derart beeinflusst werden, dass sich die relative Strahlrichtung der Austrittsstrahlen 4a,4b unterscheidet (d.h. dass der zweite Austrittsstrahl 4b unter einem Winkel α zum ersten Austrittsstrahl 4a verläuft), sondern auch dahingehend, dass sich die Strahldivergenz des ersten und zweiten Austrittsstrahls 4a,4b unterscheidet. Dies ist insbesondere günstig, wenn die Austrittsstrahlen 4a, 4b fokussiert werden, da durch die Änderung der Strahldivergenz ein weiterer Freiheitsgrad bei der Festlegung der jeweiligen Fokusposition gegeben ist.

Der Strahlteiler 2 ist in Fig. 2 beispielhaft als Polarisationsstrahlteiler ausgebildet, d.h. die beiden Eintrittsstrahlen 3a,3b werden in Abhängigkeit von ihrer Polarisationsrichtung reflektiert bzw. transmittiert. Zu diesem Zweck ist typischer Weise an der Vorderseite des Strahlteilers 2 eine polarisationsselektive Beschichtung aufgebracht, die eine Transmission bzw. Reflexion der Eintrittsstrahlen 3a,3b in Abhängigkeit von der Polarisationsrichtung ermöglicht. Bei dem ersten Eintrittsstrahl 3a mit einer ersten Polarisationsrichtung und dem zweiten Eintrittsstrahl 3b mit einer zweiten, zur ersten senkrechten Polarisationsrichtung kann es sich insbesondere um zwei senkrecht zueinander polarisierte Strahlungsanteile ein- und desselben in die Strahlbeeinflussungsoptik 1 eintretenden Strahls handeln, der von einer Strahlungsquelle, insbesondere von einer Laserquelle, erzeugt wird. In diesem Fall wird der eintretende Strahl an dem Strahlteiler 2 in die beiden Eintrittsstrahlen 3a, 3b aufgeteilt. Es versteht sich, dass der Strahlteiler 2 der Fig. 2 alternativ auch als wellenlängenselektiver Strahlteiler 2 gemäß Fig. 1 ausgebildet sein kann und dass der Strahlteiler 2 der Fig. 1 alternativ als Polarisationsstrahlteiler ausgebildet sein kann.

**Fig. 3** zeigt eine weiteres Beispiel einer Strahlbeeinflussungsoptik 1, deren Strahlteiler 2 und Spiegelelement 6 zur Erzeugung eines Austrittswinkels α zwischen dem ersten und dem zweiten Austrittsstrahl 4a,4b zueinander verkippt (d.h. nicht parallel) angeordnet sind. Im Unterschied zu den Strahlbeeinflussungsoptiken 1 der Fig. 1 und Fig. 2 ist der Strahlteiler 2 in Fig. 3 zur Erzeugung einer vorbestimmten Strahldivergenz des ersten Austrittsstrahls 4a ausgebildet. Hierzu weist die eintrittsseitige optische Oberfläche 16 des Strahlteilers 2, an der beispielsweise eine wellenlängenselektive Beschichtung vorgesehen sein kann, eine vorgegebene, konvexe Krümmung auf. Durch die konvexe Krümmung der optischen Oberfläche 16 wird die Strahldivergenz des ersten Austrittsstrahls 4a vergrößert. Alternativ oder zusätzlich kann zur Beeinflussung der Strahldivergenz des zweiten Austrittsstrahls 4b auch eine spiegelelementseitige optische Oberfläche 17 des Strahlteilers 2 gekrümmt ausgebildet werden. Die Krümmung der optischen Oberflächen 16, 17 kann gleich oder unterschiedlich sein. Durch die Festlegung der Krümmung der optischen Oberflächen 16, 17 kann die Strahldivergenz eines jeweiligen Ausgangsstrahls 4a, 4b unabhängig von der ggf. vorhandenen Krümmung des Spiegelelements 6 auf einen fest vorgegebenen Wert eingestellt werden.

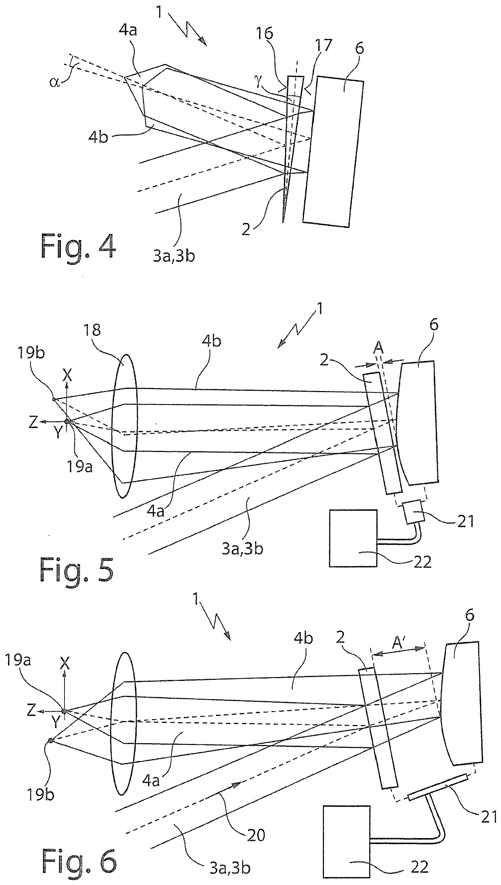

In **Fig. 4** ist ein weiteres Beispiel einer Strahlbeeinflussungsoptik 1 dargestellt, bei der zur Erzeugung eines vorbestimmten Winkelversatzes, d.h. eines vorbestimmten Winkels α zwischen dem ersten und zweiten Austrittsstrahl 4a, 4b, eine eintrittsseitige optische Oberfläche 16 und eine spiegelelementseitige optische Oberfläche 17 des Strahlteilers 2 unter einem Winkel γ (hier: ca. 10°, es sind jedoch auch größere Winkel möglich) zueinander ausgerichtet sind. Nach dem Durchlaufen des plattenartigen, keilförmig ausgebildeten Strahlteilers 2 ist der zweite Austrittsstrahl 4b gegenüber dem ersten Austrittsstrahl 4a verkippt, so dass die beiden Austrittsstrahlen 4a, 4b einen vorgegebenen Winkel α zueinander aufweisen, auch wenn der Strahlteiler 2 (genauer gesagt dessen Mittelebene) und das Spiegelelement 6 parallel zueinander ausgerichtet sind. Es versteht sich, dass durch eine zusätzliche Verkippung von Strahlteiler 2 und Spiegelelement 6, wie dies beispielsweise in Fig. 1 bis Fig. 3 gezeigt ist, der Winkel α zwischen den beiden Austrittsstrahlen 4a, 4b zusätzlich verändert werden kann.

In **Fig. 5** und **Fig. 6** ist ein Beispiel einer Strahlbeeinflussungsoptik 1 dargestellt, die außer dem Strahlteiler 2 und dem Spiegelelement 6 ein als Fokussierlinse ausgebildetes Fokussierelement 18 zur Fokussierung des ersten Austrittsstrahls 4a in einem ersten Fokuspunkt 19a und des zweiten Austrittsstrahls 4b in einem zweiten Fokuspunkt 19b umfasst. Der erste und der zweite Austrittsstrahl 4a,4b überlagern sich teilweise und können daher durch den Strahlteiler 2 und das Spiegelelement 6 auf das gleiche Fokussierelement 18 gerichtet werden, an dem der erste Austrittsstrahl 4a an einem ersten (Soll-) Fokuspunkt 19a und der zweite Austrittsstrahl an einem zweiten (Soll-)Fokuspunkt 19b fokussiert werden. Der Strahlteiler 2, das Spiegelelement 6 und das Fokussierelement 18 sind an einer nicht dargestellten Grundstruktur der Strahlbeeinflussungsoptik 1 gelagert.

In Fig. 5 und Fig. 6 ist das Spiegelelement 6 translatorisch verfahrbar ausgebildet. Beispielshaft ist zur Veranschaulichung in Fig. 6 der Abstand A' zwischen dem Strahlteiler 2 und dem Spiegelelement 6 durch translatorisches Verfahren des Spiegelelements 6 in einer zur Einfallsrichtung 20 der Eintrittsstrahlen 3a,3b parallelen Richtung gegenüber dem in Fig. 5 gezeigten Abstand A vergrößert worden. Durch die translatorische Verfahrbarkeit kann eine Nachführung des Abstands A, A' zwischen dem Strahlteiler 2 und dem Spiegelelement 6 durchgeführt werden, so dass die beiden Austrittsstrahlen 4a,4b auch bei einer Drift der Strahlrichtung stets ungefähr mittig auf das Fokussierelement 18 ausgerichtet werden können. Wird wie in Fig. 5 und Fig. 6 dargestellt ist der Strahlteiler 2 nicht verkippt, bleibt der erste Fokuspunkt 19a stets im Ursprung des X-, Y-, Z-Koordinatensystems (mit X-Achse parallel zur optischen Achse des Fokussierelements 18), wohingegen sich der zweite Fokuspunkt 19b in Fig. 5 bei positiven X-Koordinaten und in Fig. 6 bei negativen X-Koordinaten befindet.

Alternativ oder zusätzlich kann auch der Strahlteiler 2 translatorisch verfahrbar sein. Zum translatorischen Verfahren ist in Fig. 5 und Fig. 6 ein als Linearaktuator ausgebildeter und ansteuerbarer Aktuator 21 vorgesehen. Die Strahlbeeinflussungsoptik 1 umfasst ferner eine Steuereinrichtung 22, durch die die Aktuatoren 8;13;21, die den Strahlteiler 2 und/oder das Spiegelelement 6 verkippen und/oder deformieren und/oder verfahren, jeweils geeignet angesteuert werden können. Zur Ansteuerung sind die Aktuatoren 21 signaltechnisch mit der Steuereinrichtung 22 verbunden. Entsprechende signaltechnische Verbindungen zu den verkippenden und/oder deformierenden Aktuatoren 8, 13 von Fig. 1 und Fig. 2 sind ebenfalls voranden, auf deren Darstellung wurde aber zur besseren Übersichtlichkeit verzichtet. Die individuelle Ansteuerung der Aktuatoren 8, 13, 21 mittels der Steuereinrichtung 22 erlaubt es, dass der erste und der zweite Fokuspunkt 19a,19b eine jeweils gewünschte (Soll-)Lage im dreidimensionalen Raum einnehmen und insbesondere die Lage der beiden Fokuspunkte 19a, 19b in drei Raumdimensionen (X, Y, Z) relativ zueinander eingestellt werden können.

Die Beeinflussung der Lage der Fokuspunkte 19a, 19b in Richtung der Y-Achse kann durch eine Verkippung des Strahlteilers 2 bzw. des Spiegelelements 6 um eine Kippachse erfolgen, welche sich in der Zeichenebene befindet (nicht gezeigt). Eine Kompensation der Änderung der Strahllage durch eine Änderung des Abstands A, A' zwischen dem Strahlteiler 2 und dem Spiegelelement 6 mit dem Ziel, das Fokussierelement 18 stets annähernd mittig auszuleuchten, ist nur entlang der X-Achse möglich, welche senkrecht zur Strahlrichtung des ersten Austrittsstrahls 4a (und typischer Weise parallel zur optischen Achse des Fokussierelements 18) in der Umlenkebene der Eintrittsstrahlen 3a, 3b und des zweiten Austrittsstrahls 4b liegt und typischer Weise nur unter der Bedingung, dass der zweite Austrittsstrahl 4b in einer Grundstellung (d.h. bei unveränderten Abstand A zwischen Strahlteiler 2 und Spiegelelement 6 (vgl. Fig. 5)) einen größeren Abstand zu den Eintrittsstrahlen 3a, 3b aufweist als der erste Austrittsstrahl 4a. Eine solche Kompensationsmöglichkeit gibt es nicht bei einer Änderung der Strahlrichtung entlang der Y-Achse. Eine Änderung der Fokuslage in Z-Richtung kann durch eine Änderung der Divergenz erfolgen.

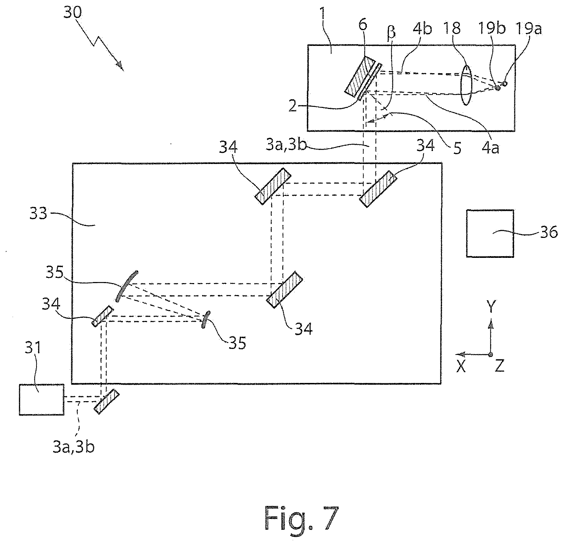

In **Fig. 7** ist ein Strahlformungssystem dargestellt, welches als EUV-Strahlungserzeugungsvorrichtung 30 ausgebildet ist. Das Strahlformungssystem 30 umfasst eine als Treiberlasereinrichtung 31 ausgebildete Strahlungsquelle zur Erzeugung des ersten und zweiten Eintrittsstrahls 3a,3b mit unterschiedlichen Wellenlängen und eine Strahlbeeinflussungsoptik 1, die wie in Fig. 5 und Fig. 6 zur Fokussierung des ersten und zweiten Austrittsstrahls 4a,4b an einer ersten und zweiten Fokusposition 19a, 19b dient. Das Strahlformungssystem 30 umfasst ferner eine Strahlführungseinrichtung 33 mit einer Mehrzahl an Umlenkspiegeln 34 bzw. Parabolspiegeln 35. Auf die Darstellung von Messeinrichtungen zur Überwachung des Strahlengangs der Eintrittsstrahlen 3a,3b wurde aus Gründen der Übersichtlichkeit verzichtet.

Die Treiberlasereinrichtung 31 umfasst zwei CO₂-Strahlquellen sowie mehrere Verstärker zur Erzeugung der beiden Eintrittsstrahlen 3a,3b mit hoher Strahlungsleistung (> 1 kW) in gepulster Form, wobei die beiden unterschiedlichen Wellenlängen durch ein Gitter in der Kavität der jeweiligen Strahlquellen erzeugt werden.. Von der Treiberlasereinrichtung 31 werden die Eintrittsstrahlen 3a,3b zunächst in die Strahlführungseinrichtung 33 geführt und anschließend der Strahlbeeinflussungsoptik 1 zugeführt, die im gezeigten Beispiel in einer VakuumKammer angeordnet ist. Die Eintrittsstrahlen 3a,3b treffen unter einem Winkel β von ca. 45° zur Normalenrichtung 5 des Strahlteilers 2 der Strahlbeeinflussungsoptik 1 auf den Strahlteiler 2 auf. Nachdem die beiden Eintrittsstrahlen 3a,3b mittels der Strahlbeeinflussungsoptik 1 in ihrer relativen Strahlrichtung bzw. Strahldivergenz in der vorbeschriebenen Weise beeinflusst wurden, werden diese auf das als Fokussierlinse ausgebildete Fokussierelement 18 gelenkt, das die beiden Austrittsstrahlen 4a,4b an den beiden Fokuspunkten 19a, 19b fokussiert.

Zur gezielten Fokussierung der beiden Austrittsstrahlen 4a,4b umfasst das Strahlformungssystem 30 weiterhin eine Regeleinrichtung 36 zum Regeln des ersten Fokuspunkts 19a an eine erste Soll-Fokuslage und des zweiten Fokuspunkts 19b an eine zweite Soll-Fokuslage. Für die Regelung wird der Strahlengang der Eintrittsstrahlen 3a, 3b mittels der weiter oben beschriebenen, nicht gezeigten Messeinrichtungen vermessen. Die Regelungseinrichtung 36 ist zur Ansteuerung der entsprechenden Aktoren signaltechnisch mit der Strahlbeeinflussungsoptik 1 und mit den (nicht dargestellten) Messeinrichtungen verbunden.

Bei dem in Fig. 7 gezeigten Strahlformungssystem 30 entspricht die Soll-Fokuslage der Position eines (nicht dargestellten) beweglichen Targets in Form eines Zinn-Tröpfchens, welches sich entlang einer vorgegebenen Bahn bewegt. Mittels der Treiberlasereinrichtung 31 können zwei in kurzem Abstand zeitlich aufeinander folgende Laserpulse erzeugt werden, welche die Eintrittsstrahlen 3a, 3b bilden. Damit die zeitlich versetzt erzeugten Eintrittsstrahlen 3a, 3b das bewegliche Target treffen, ist es erforderlich, dass diese an unterschiedlichen Raumpunkten bzw. an unterschiedlichen Soll-Fokuslagen 19a, 19b entlang der Bewegungsbahn des Targets fokussiert werden, wie dies in Fig. 7 angedeutet ist. Ein als Target-Material dienender Zinn-Tropfen wird auf diese Weise von beiden fokussierten Austrittsstrahlen 4a, 4b getroffen und hierbei in einen Plasma-Zustand überführt, der zur Erzeugung von (nicht gezeigter) EUV-Strahlung dient. Das Target-Material wird der Strahlbeeinflussungsoptik 1 mit Hilfe einer (nicht gezeigten) Bereitstellungseinrichtung zugeführt, welche das Target-Material entlang eines vorgegebenen Pfades führt, welcher die Zielposition, genauer gesagt die Soll-Fokuslagen 19a, 19b kreuzt.

In Fig. 7 sind der Strahlteiler 2 und das Spiegelelement 6 der Strahlbeeinflussungsoptik 1 im Strahlengang zwischen dem letzten Umlenkspiegel 34 der Strahlführungseinrichtung 33 und dem Fokussierelement 18 angeordnet. Es versteht sich, dass der Strahlteiler 2 und das Spiegelelement 6 auch an anderer Stelle, beispielsweise am Ort des letzten Umlenkspiegels 34 der Strahlführungseinrichtung 30, angeordnet sein können.

## Patentansprüche

1. EUV-Strahlungserzeugungsvorrichtung (30), umfassend:
mindestens eine Strahlungsquelle (31) zur Erzeugung eines ersten und zweiten Eintrittsstrahls (3a,3b) in Form von Laserstrahlen,
eine Strahlbeeinflussungsoptik (1) zur Beeinflussung des ersten und des zweiten, dem ersten zumindest teilweise überlagerten Eintrittsstrahls (3a,3b) hinsichtlich Strahlrichtung und/oder Strahldivergenz, die Strahlbeeinflussungsoptik (1) umfassend:
einen Strahlteiler (2), der ausgebildet ist, den ersten Eintrittsstrahl (3a) als ersten Austrittsstrahl (4a) zu reflektieren und den zweiten Eintrittsstrahl (3b) zu transmittieren,
ein im Strahlengang des transmittierten zweiten Eintrittsstrahls (3b) angeordnetes Spiegelelement (6), welches den zweiten Eintrittsstrahl (3b) zum Strahlteiler (2) zurück reflektiert, um einen vom Strahlteiler (2) transmittierten, dem ersten Austrittsstrahl (4a) zumindest teilweise überlagerten zweiten Austrittsstrahl (4b) zu bilden,
wobei die Strahlbeeinflussungsoptik (1) zur Beeinflussung eines Winkels (α), zwischen dem ersten und dem zweiten Austrittsstrahl (4a, 4b) und/oder zur Beeinflussung der Strahldivergenz des ersten und/oder des zweiten Austrittsstrahls (4a,4b) ausgebildet ist.

2. EUV-Strahlungserzeugungsvorrichtung (30) nach Anspruch 1, bei welcher der Strahlteiler (2) und/oder das Spiegelelement (6) zur Beeinflussung des Winkels (α) zwischen dem ersten und dem zweiten Austrittsstrahl (4a,4b), insbesondere mittels Aktuatoren (8), kippbar sind.

3. EUV-Strahlungserzeugungsvorrichtung (30) nach Anspruch 1 oder 2, bei welcher das Spiegelelement (6) zur Beeinflussung der Strahldivergenz des zweiten Austrittsstrahls (4b), insbesondere mittels eines Aktuators (13), deformierbar ausgebildet ist.

4. EUV-Strahlungserzeugungsvorrichtung (30) nach einem der vorhergehenden Ansprüche, bei welcher der Strahlteiler (2) plattenartig ausgebildet ist.

5. EUV-Strahlungserzeugungsvorrichtung (30) nach einem der vorhergehenden Ansprüche, bei welcher der Strahlteiler (2) als wellenlängenselektives optisches Element ausgebildet ist.

6. EUV-Strahlungserzeugungsvorrichtung (30) nach Anspruch 5, bei welcher der Strahlteiler (2) als Etalon ausgebildet ist.

7. EUV-Strahlungserzeugungsvorrichtung (30) nach einem der Ansprüche 1 bis 4, bei welcher der Strahlteiler (2) als Polarisationsstrahlteiler ausgebildet ist.

8. EUV-Strahlungserzeugungsvorrichtung (30) nach einem der vorhergehenden Ansprüche, bei der zur Erzeugung einer vorgegebenen Divergenz des ersten und/oder zweiten Austrittsstrahls (4a,4b) eine eintrittsseitige und/oder eine spiegelelementseitige optische Oberfläche (16,17) des Strahlteilers (2) eine Krümmung aufweisen.

9. EUV-Strahlungserzeugungsvorrichtung (30) nach einem der vorhergehenden Ansprüche, bei der zur Erzeugung eines vorgegebenen Winkelversatzes zwischen dem ersten und dem zweiten Austrittsstrahl (4a, 4b) eine eintrittsseitige optische Oberfläche (16) und eine spiegelelementseitige optische Oberfläche (17) des Strahlteilers (2) unter einem Winkel (γ) zueinander ausgerichtet sind.

10. EUV-Strahlungserzeugungsvorrichtung (30) nach einem der vorhergehenden Ansprüche, weiter umfassend: ein Fokussierelement (18) zur Fokussierung des ersten Austrittsstrahls (4a) in einem ersten Fokuspunkt (19a) und des zweiten Austrittsstrahls (4b) in einem zweiten Fokuspunkt (19b).

11. EUV-Strahlungserzeugungsvorrichtung (30) nach Anspruch 10, bei der das Fokussierelement als Fokussierlinse (18) ausgebildet ist.

12. EUV-Strahlungserzeugungsvorrichtung (30) nach einem der vorhergehenden Ansprüche, bei welcher der Strahlteiler (2) und/oder das Spiegelelement (6) insbesondere mittels Aktuatoren (21) translatorisch verfahrbar sind.

13. EUV-Strahlungserzeugungsvorrichtung (30) nach einem der vorhergehenden Ansprüche, weiter umfassend: eine Steuereinrichtung (22) zur Ansteuerung von den Strahlteiler (2) und/oder das Spiegelelement (6) verkippenden und/oder deformierenden und/oder verfahrenden Aktuatoren (8;13;21).

14. EUV-Strahlungserzeugungsvorrichtung (30) nach einem der vorhergehenden Ansprüche, weiter umfassend: eine Regeleinrichtung (36) zum Regeln des ersten Fokuspunkts (19a) an eine erste Soll-Fokuslage und des zweiten Fokuspunkts (19b) an eine zweite Soll-Fokuslage.

## Claims

1. An EUV radiation generating device (30), comprising:
at least one radiation source (31) for generating a first and second entrance beam (3a, 3b) in the form of laser beams,
a beam influencing optical unit (1) for influencing the first entrance beam (3a) and the second entrance beam (3b), which is at least partially superposed on the first entrance beam, with respect to beam direction and/or beam divergence, wherein the beam influencing optical unit (1) comprises:
a beam splitter (2) which is configured to reflect the first entrance beam (3a) as a first exit beam (4a) and to transmit the second entrance beam (3b),
a mirror element (6) which is arranged in the beam path of the transmitted, second entrance beam (3b) and which reflects the second entrance beam (3b) back to the beam splitter (2) so as to form a second exit beam (4b) that is transmitted by the beam splitter (2) and at least partially superposed on the first exit beam (4a),
wherein the beam influencing optical unit (1) is configured for influencing an angle (α) between the first and the second exit beams (4a, 4b) and/or for influencing the beam divergence of the first and/or of the second exit beam (4a, 4b).

2. The EUV radiation generating device (30) as claimed in claim 1, in which the beam splitter (2) and/or the mirror element (6) are tiltable for influencing the angle (α) between the first and second exit beams (4a, 4b), in particular using actuators (8).

3. The EUV radiation generating device (30) as claimed in claim 1 or 2, in which the mirror element (6) is configured such that it is deformable for influencing the beam divergence of the second exit beam (4b), in particular using an actuator (13).

4. The EUV radiation generating device (30) as claimed in one of the preceding claims, in which the beam splitter (2) has a plate-type configuration.

5. The EUV radiation generating device (30) as claimed in one of the preceding claims, in which the beam splitter (2) is configured as a wavelength-selective optical element.

6. The EUV radiation generating device (30) as claimed in claim 5, in which the beam splitter (2) is configured as an etalon.

7. The EUV radiation generating device (30) as claimed in one of claims 1 to 4, in which the beam splitter (2) is configured as a polarization beam splitter.

8. The EUV radiation generating device (30) as claimed in one of the preceding claims, in which an entrance side and/or a mirror element side optical surface (16, 17) of the beam splitter (2) have a curvature for producing a specified divergence of the first and/or second exit beam (4a, 4b).

9. The EUV radiation generating device (30) as claimed in one of the preceding claims, in which an entrance side optical surface (16) and a mirror element side optical surface (17) of the beam splitter (2) are aligned at an angle (γ) with respect to one another for producing a specified angular offset between the first and second exit beams (4a, 4b).

10. The EUV radiation generating device (30) as claimed in one of the preceding claims, further comprising: a focusing element (18) for focusing the first exit beam (4a) at a first focal point (19a) and the second exit beam (4b) at a second focal point (19b).

11. The EUV radiation generating device (30) as claimed in claim 10, in which the focusing element is configured as a focusing lens (18).

12. The EUV radiation generating device (30) as claimed in one of the preceding claims, in which the beam splitter (2) and/or the mirror element (6) are displaceable in a translational manner, in particular using actuators (21).

13. The EUV radiation generating device (30) as claimed in one of the preceding claims, further comprising: a control apparatus (22) for controlling actuators (8; 13; 21) that tilt and/or deform and/or displace the beam splitter (2) and/or the mirror element (6).

14. The EUV radiation generating device (30) as claimed in one of the preceding claims, further comprising: an adjustment apparatus (36) for adjusting the first focal point (19a) to a first prespecified focus location and the second focal point (19b) to a second prespecified focus location.

## Revendications

1. Dispositif générateur de rayonnement EUV (30), comprenant :
au moins une source de rayonnement (31) servant à générer un premier et un deuxième faisceau d'entrée (3a, 3b) sous la forme de faisceaux laser,
une optique ayant une influence sur le rayonnement (1) pour influencer le premier et le deuxième faisceau d'entrée (3a, 3b), le deuxième étant au moins en partie superposé au premier, en ce qui concerne la direction et/ou la divergence du faisceau, l'optique ayant une influence sur le rayonnement (1) comprenant :
un diviseur de faisceau (2) qui est conçu pour réfléchir le premier faisceau d'entrée (3a) en tant que premier faisceau de sortie (4a) et pour transmettre le deuxième faisceau d'entrée (3b),
un élément formant miroir (6), disposé dans le chemin optique du deuxième faisceau d'entrée (3b) transmis, qui renvoie le deuxième faisceau d'entrée (3b) par réflexion vers le diviseur de faisceau (2) afin de former un deuxième faisceau de sortie (4b) transmis par le diviseur de faisceau (2) et superposé au moins en partie au premier faisceau de sortie (4a),
l'optique ayant une influence sur le rayonnement (1) étant réalisée pour influencer un angle (α) entre le premier et le deuxième faisceau de sortie (4a, 4b) et/ou pour influencer la divergence de faisceau du premier et/ou du deuxième faisceau de sortie (4a, 4b).

2. Dispositif générateur de rayonnement EUV (30) selon la revendication 1, dans lequel le diviseur de faisceau (2) et/ou l'élément formant miroir (6) peuvent être inclinés, en particulier au moyen d'actionneurs (8), pour influencer l'angle (α) entre le premier et le deuxième faisceau de sortie (4a, 4b).

3. Dispositif générateur de rayonnement EUV (30) selon la revendication 1 ou 2, dans lequel l'élément formant miroir (6) est conçu déformable, en particulier au moyen d'un actionneur (13), pour influencer la divergence de faisceau du deuxième faisceau de sortie (4b).

4. Dispositif générateur de rayonnement EUV (30) selon l'une des revendications précédentes, dans lequel le diviseur de faisceau (2) est réalisé à la manière d'une plaque.

5. Dispositif générateur de rayonnement EUV (30) selon l'une des revendications précédentes, dans lequel le diviseur de faisceau (2) est réalisé comme un élément optique sélectif en longueur d'onde.

6. Dispositif générateur de rayonnement EUV (30) selon la revendication 5, dans lequel le diviseur de faisceau (2) est réalisé sous forme d'étalon.

7. Dispositif générateur de rayonnement EUV (30) selon l'une des revendications 1 à 4, dans lequel le diviseur de faisceau (2) est réalisé sous forme d'un diviseur de faisceau polarisant.

8. Dispositif générateur de rayonnement EUV (30) selon l'une des revendications précédentes, dans lequel, pour produire une divergence prédéfinie du premier et/ou du deuxième faisceau de sortie (4a, 4b), une surface optique (16, 17) côté entrée et/ou côté élément formant miroir du diviseur de faisceau (2) présente une courbure.

9. Dispositif générateur de rayonnement EUV (30) selon l'une des revendications précédentes, dans lequel, pour produire un décalage angulaire prédéfini entre le premier et le deuxième faisceau de sortie (4a, 4b), une surface optique (16) côté entrée et une surface optique (17) côté élément formant miroir du diviseur de faisceau (2) sont orientées de manière à former un angle (γ) l'une par rapport à l'autre.

10. Dispositif générateur de rayonnement EUV (30) selon l'une des revendications précédentes, comprenant en outre : un élément de focalisation (18) pour focaliser le premier faisceau de sortie (4a) en un premier point focal (19a) et le deuxième faisceau de sortie (4b) en un deuxième point focal (19b).

11. Dispositif générateur de rayonnement EUV (30) selon la revendication 10, dans lequel l'élément de focalisation est réalisé sous la forme d'une lentille de focalisation (18).

12. Dispositif générateur de rayonnement EUV (30) selon l'une des revendications précédentes, dans lequel le diviseur de faisceau (2) et/ou l'élément formant miroir (6) peuvent être mobiles ou coulissables en translation, en particulier au moyen d'actionneurs (21).

13. Dispositif générateur de rayonnement EUV (30) selon l'une des revendications précédentes, comprenant en outre : un dispositif de commande (22) pour commander les actionneurs (8 ; 13 ; 21) qui inclinent et/ou déforment et/ou déplacent le diviseur de faisceau (2) et/ou l'élément formant miroir (6).

14. Dispositif générateur de rayonnement EUV (30) selon l'une des revendications précédentes, comprenant en outre : un dispositif de réglage (36) pour régler le premier point focal (19a) à une première position focale de consigne et le deuxième point focal (19b) à une deuxième position focale de consigne.
